**Europäisches Patentamt**

**European Patent Office**

**Office européen des brevets**

(11) Numéro de publication: **0 188 982**
A1

## (12) DEMANDE DE BREVET EUROPEEN

(21) Numéro de dépôt: **85420237.1**

(22) Date de dépôt: **19.12.85**

(51) Int. Cl.⁴: **B 23 Q  11/00**, B 24 B  5/40

(30) Priorité: **21.12.84  FR 8420148**

(43) Date de publication de la demande: **30.07.86**
**Bulletin 86/31**

(84) Etats contractants désignés: **CH DE GB IT LI SE**

(71) Demandeur: **SOCIETE DE RECTIFICATION CYLINDRIQUE FRANCAISE S.R.C.F., 37, Rue Colin, F-69100 Villeurbanne (FR)**

(72) Inventeur: **Coster, Jean-Claude, Lieudit "Le Village Jardin", F-38200 Vienne (FR)**
Inventeur: **Montabert, Roger, 57 Avenue des Frères Lumière, F-69007 Lyon (FR)**

(74) Mandataire: **Maisonnier, Jean, 28 rue Servient, F-69003 Lyon (FR)**

(54) Broche à porte-à-faux variable, pour une machine-outil.

㊗ L'invention concerne une rectifieuse dont la broche (2) porte une meule (4), par exemple pour rectifier un alésage.

La broche (2) est télescopique sur un chariot (1), lequel commande le mouvement d'usinage.

Application: réduction du porte-à-faux, notamment pour usiner des alésages profonds.

EP 0 188 982 A1

La présente invention est relative à une broche porte-outil d'un type nouveau destinée à équiper une machine ou-outil, par exemple une aléseuse ou une rectifieuse.

On sait que pour rectifier un alésage intérieur, on présente devant la pièce entraînée en rotation, une broche porte-outil fixée sur un chariot qui est animé du mouvement dit de chariotage. Il s'agit d'un mouvement alternatif parallèle à l'axe de l'alésage, qui se communique à l'outil que la broche tient engagé plus ou moins profondément dans ledit alésage. Ce faisant, on comprend que la broche soit nécessairement disposée en porte-à-faux à l'avant du chariot, l'importance du porte-à-faux étant d'autant plus grande que l'alésage est plus profond.

Pour usiner un alésage intérieur de grande longueur axiale, on peut donc être conduit à utiliser une broche dont le porte-à-faux est très important en avant du chariot de travail. L'importance de ce porte-à-faux peut laisser apparaître des vibrations en cours d'usinage, et elle nuit à la rigidité du support, c'est-à-dire à la qualité et à la précision de l'usinage.

La présente invention a pour but d'éviter ces inconvénients en partant de la constatation selon laquelle un porte-à-faux important de la broche en avant du chariot n'est nécessaire que pour usiner la partie la plus profonde d'un alésage à grande longueur axiale. Par contre, pour usiner des parties de l'alésage plus proches de son ouverture, les machines-outils de type connu prévoient de reculer d'autant le chariot, tandis que le porte-à-faux de la broche porte-outil conserve la même valeur.

La présente invention a pour but d'éviter ces inconvénients en réalisant une machine-outil sur laquelle le chariot d'usinage est équipé d'une broche porte-outil dont le porte-à-faux variable peut être modifié en cours d'usinage, ce qui permet de le maintenir constamment au voisinage de la valeur minima compatible avec la cinématique des mouvements.

Une machine-outil selon l'invention comprend un chariot d'usinage équipé d'une broche porte-outil, et elle est caractérisée en ce que ce chariot comporte plusieurs colonnes de guidage toutes parallèles à la direction de son mouvement, et sur lesquelles est guidé pour un coulissement sans jeu l'ensemble de la broche porte-outil, de son moteur d'entraînement, et de moyens pour commander ou verrouiller le coulissement de cet ensemble sur les colonnes de guidage.

Grâce à cette disposition, la position de la broche porte-outil étant définie par rapport au chariot, on peut usiner avec un porte-à-faux minimum, c'est-à-dire avec une précision maxima, un tronçon de l'alésage. Ensuite, on fait varier la position de la broche sur son chariot avant de la verrouiller à nouveau, ce qui permet d'entreprendre, toujours avec le porte-à-faux minimum, une opération d'usinage dans un autre tronçon de l'alésage, et ainsi de suite.

On notera en particulier qu'une telle réalisation se prête particulièrement bien à une commande numérique , intégrée à celle de l'ensemble de la machine-outil.

Le dessin annexé, donné à titre d'exemple non limitatif, permettra de mieux comprendre les caractéristiques de l'invention.

Figure 1 est une vue montrant l'ensemble d'un chariot d'usinage selon l'invention , dont le coulisseau est en position de porte-à-faux minimum.

Figure 2 est une vue analogue , pour une position intermédiaire du coulisseau.

Figure 3 est une vue en plan montrant le détail du chariot , dans une position correspondant sensiblement à celle de la figure 1.

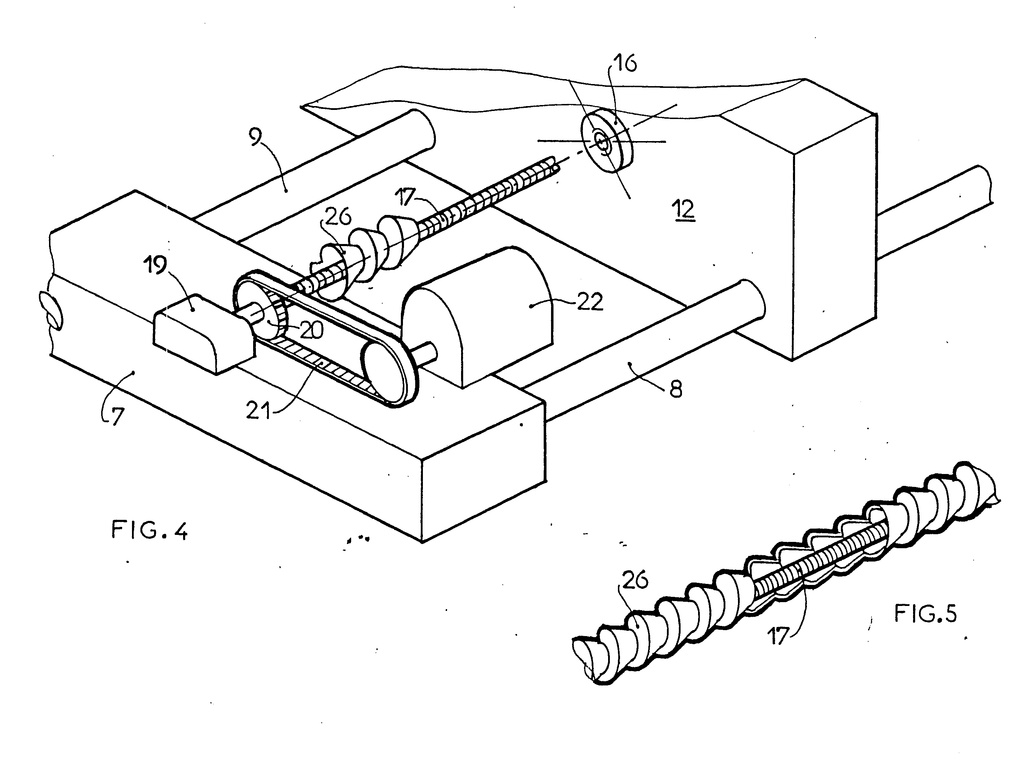

Figure 4 est une vue en perspective , suivant la direction de la flèche IV ( figure 3).

Figure 5 montre un détail de la vis mère commandant le positionnement du coulisseau sur le chariot .

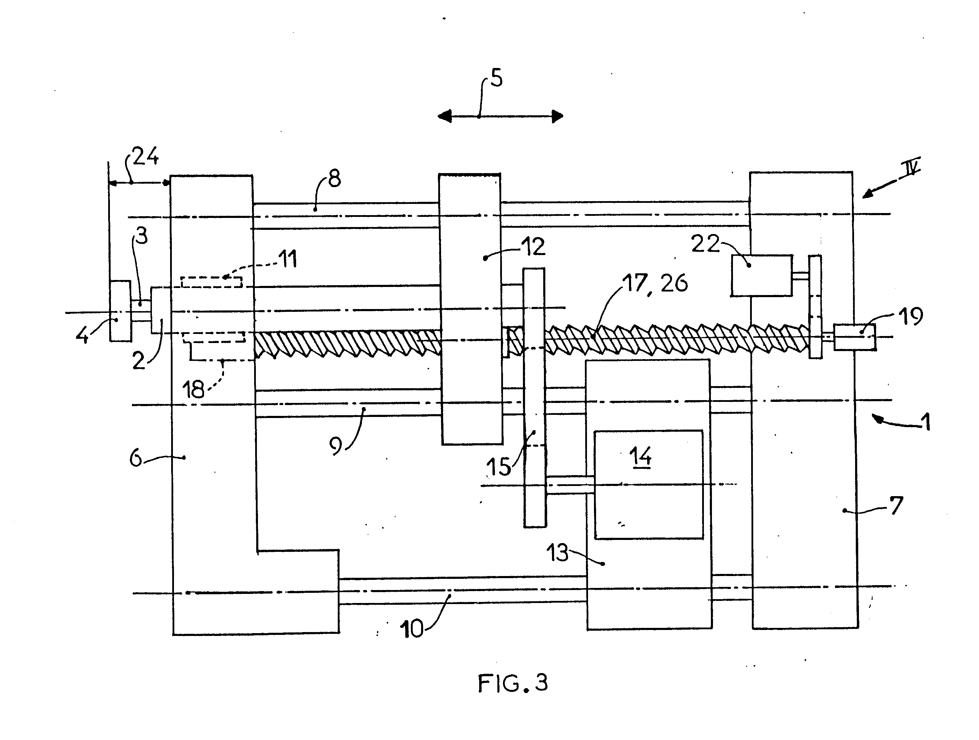

On a représenté sur les dessins le chariot 1 d'une rectifieuse , dont la broche 2 sert de guidage à un axe rotatif 3 , portant une meule 4 . On sait que l'ensemble du chariot 1 est amené à se déplacer dans le sens longitudinal schématisé sur la figure 3 par la flèche double 5 , cependant que la meule d'usinage 4 est entraînée en rotation par son axe 3 pour rectifier une pièce non représentée , et par exemple l'intérieur d'un alésage.

Selon l'invention , le bâti du chariot 1 comprend deux traverses 6 et 7 , reliées par trois colonnes de guidage longitudinales 8 , 9 et 10 . La traverse 6 comporte un palier 10 , 11 , à l'intérieur duquel peut librement coulisser la broche 2 .

L'arrière de cette broche 2 est solidaire d'une platine transversale 12 , munie de perçages lui permettant de coulisser librement sur les colonnes de guidage 8 et 9 . Cette platine 12 est solidaire d'une autre platine 13 , qui porte un moteur 14 , assurant l'entraînement en rotation de l'axe 3 et de sa meule 4 . La platine 13 est équipée , elle aussi , de deux perçages lui permettant de coulisser dans le sens longitudinal sur les deux colonnes de guidage 9 et 10 du chariot 1 . Une transmission 15 complète la chaîne cinématique par laquelle le moteur 14 entraîne en rotation l'arrière de l'arbre 3 .

La platine transversale 12 est par ailleurs solidaire d'un écrou ou perçage taraudé 16 , dans lequel est vissée une vis mère 17 . Cette dernière est montée longitudinalement sur le chariot 1 , et ses extrémités peuvent tourner librement dans des paliers 18 et 19 , portés respectivement par les traverses 6 et 7 . L'extrémité arrière de la vis mère 17 comporte un pignon d'entraînement 20 , qu'une chaîne ou courroie crantée 21 relie à un moteur d'entraînement 22 . Ce dernier est solidaire de la traverse 7 . Il s'agit préférablement d'un moteur électrique pas à pas , c'est-à-dire correspondant particulièrement bien à une commande numérique pour l'ensemble de la machine-outil.

Un soufflet de protection 26 déformable dans le sens longitudinal , est préférablement disposé autour de la vis mère 17 .

Le fonctionnement est le suivant :

Lorsqu'on commande la rotation du moteur 22 suivant un nombre donné d'incréments , on modifie d'une quantité déterminée , laq position angulaire de la vis mère 17 . Cela définit donc avec précision la position de l'ensemble du chariot 12 , 13 , qui peut coulisser dans le sens longitudinal ( flèche double 5) , par rapport au bâti 6 , 7 , 8 , 9 , 10 , du chariot 1.

4

L'utilisation de ce coulisseau permet de réduire constamment au minimum , l'importance du porte-à-faux de la meule de rectification 4 , en avant de la traverse 6.

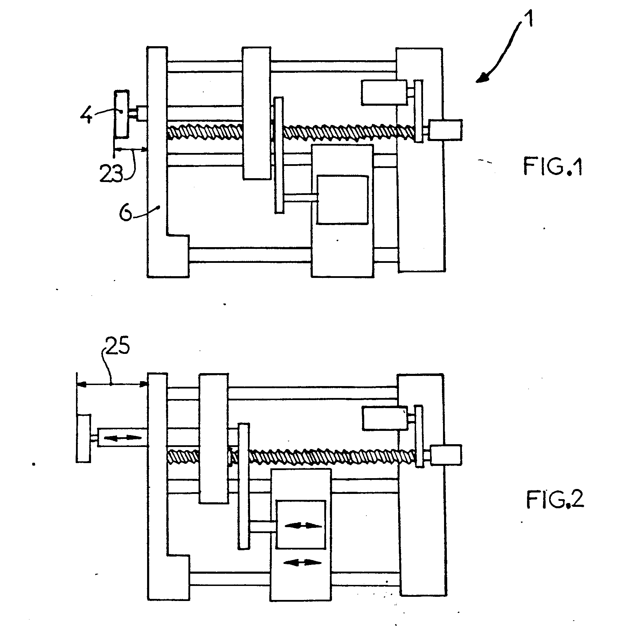

On a illustré sur les figures 1 à 3 , diverses valeurs de ce porte-à-faux de l'outil 4 , à savoir : un porte-à-faux 23 procheu du minimum , et des porte-à-faux 24 et 25 , pour des valeurs intermédiaires . Une fois la valeur de ce porte-à-faux 23 , 24 , 25 fixée , on arrête le moteur de réglage 22 , et on fait fonctionner l'ensemble du chariot 6 , 7 , 8 , 9 , 10 , à la manière connue , c'est-à-dire qu'il avance suivant un mouvement de chariotage ( flèche double 5) , tandis que le moteur 14 entraîne en rotation la meule 4 . Une fois terminée la passe dont l'amplitude correspond à la valeur telle que 23 , 24 , ou 25 choisie pour le porte-à-faux , on actionne à nouveau le moteur pas à pas 22 , qui déplace le coulisseau 12 , 13 , pour définir une nouvelle valeur du porte-à-faux de la meule 4 . On utilise à nouveau le chariot 1 dans son mouvement de chariotage traditionnel , et ainsi de suite .

Grâce à cette disposition , on voit qu'on maintient toujours à une valeur proche du minimum , compatible avec la forme de la pièce à usiner , la valeur du porte-à-faux 23 , 24 ou 25. Ceci élimine tout risque de vibration , et permet à la rectifieuse de tenir des cotes plus précises et correspondant à un meilleur état de surface.

5

REVENDICATIONS

1 - Machine-outil équipée d'un chariot d'usinage (1) équipé d'une broche porte-outil (2) , caractérisée en ce que ce chariot (1) comporte plusieurs colonnes de guidage (8) , (9) , (10) , toutes parallèles à la direction (5) de son mouvement de chariotage , et sur lesquelles est guidé pour un coulissement sans jeu , l'ensemble de la broche porte-outil (9) , de son moteur d'entraînement (14) et de moyens pour commander ou verrouiller le coulissement de cet ensemble sur les colonnes de guidage (8) , (9) , (10).

2 - Machine -outil suivant la revendication 1, caractérisée en ce que la position longitudinale de la broche porte-outil (9) étant définie par rapport au chariot (1), on peut usiner une passe avec un porte-à-faix (23) , (24) , (25) réduit au minimum , c'est-à-dire avec une précision maxima , après quoi , on fait varier la position de la broche (9) sur son chariot (1) , avant de la verrouiller à nouveau, ce qui permet d'entreprendre , toujours avec le porte-à-faux minimum , une opération d'usinage dans une passe correspondant à un autre tronçon sur la pièce , et ainsi de suite.

3 - Machine-outil suivant la revebdication 1 , caractérisée en ce que le chariot (1) comporte deux traverses (6) et (7) reliées par trois colonnes de guidage (8) , (9) et (10).

4 - Machine-outil suivant l'une quelconque des revendications précédentes , caractérisée en ce que sur les colonnes (8) , (9) et (10) peut coulisser , dans le sens longitudinal , un chariot (12) , (13) ; portant la broche d'usinage (9) et son moteur (14) entraînant l'outil (4).

5 - Machine-outil suivant l'une quelconque des revendications précédentes , caractérisée en ce que les traverses (6) et (7) du chariot (1) portent dans des paliers (18) et (19),les extrémités d'une vis-mère longitudinale entraînée en rotation par un moteur pas-à-pas (22) , cette vis-mère étant engagée dans un écrou (16) solidaire du coulisseau (12) (13).

6 - Machine-outil suivant la revendication 5 , caractérisée en ce que la vis-mère (17) est logée à l'intérieur d'un soufflet protecteur déformable (26).

0 188 982

1

4

23

6

FIG.1

25

FIG.2

FIG.3

PL.2/3

0 188 982

FIG.5

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 828 586  (LIST)<br>* Revendication * | 1,2 | B 23 Q    11/00<br>B 24 B      5/40 |
| Y | | 3,6 | |
| | --- | | |
| Y | DE-B-2 657 796  (MONFORTS)<br>* Page 6, lignes 37-51 * | 3 | |
| | --- | | |
| Y | US-A-2 798 340  (ROBERTS)<br>* Colonne 2, lignes 1-5 * | 6 | |
| | --- | | |
| A | FR-A-1 566 042  (SUNSTRAND) | 1 | |
| | --- | | |
| A | FR-A-1 213 878  (CREUSOT) | 1 | |
| | --- | | DOMAINES TECHNIQUES RECHERCHES (Int. Cl.4) |
| A | FR-A-2 310 827  (DECKEL) | 4 | |
| | ----- | | B 23 Q<br>B 24 B |

Le présent rapport de recherche a été établi pour toutes les revendications

| Lieu de la recherche | Date d'achèvement de la recherche | Examinateur |
|---|---|---|
| LA HAYE | 25-03-1986 | DE GUSSEM J.L. |